# EUROPEAN PATENT APPLICATION

(11) **EP 3 273 399 A1**
(43) Date of publication of application: **24.01.2018**
(21) Application number: 15885482.8
(22) Date of filing: 19.03.2015
(51) Int. Cl.: G06Q 30/02, G06Q 20/06

(54) **POINT EXCHANGE SYSTEM AND POINT EXCHANGE METHOD**

(71) Applicant: Costa Azul Inc., Tokyo 132-0035 (JP)
(72) Inventor: HANDA, Toshihiro, Cebu City Cebu Province 6000 (PH)
(74) Representative: Becker, Eberhard
(86) International application number: PCT/JP2015/058278
(87) International publication number: WO 2016/147386

(57) **Abstract**

A point exchange system according to at least one embodiment of the present invention is configured to be capable of performing exchange of original points provided by a plurality of point providers respectively, at a predetermined exchange rate by using an electronic calculating device connected to a network, and includes: a unit which processes associated profit data on the basis of profit master data; a unit which sets a value index to each of the original points; and a unit configured to perform the exchange on the basis of an exchange rate set on the basis of the profit master data and the value indices.

## Description

### TECHNICAL FIELD

The present disclosure relates to a point exchange system configured to perform, among business operators, exchange of points which can be exchanged for a product or a service and are provided by a plurality of business operators respectively, by using an electronic calculating device such as a computer, and to a point exchange method which can be implemented with the system.

### BACKGROUND

Points issued by business operators on the basis of their original rules and regulations have been known. Popular examples of such points include: a frequent-flyer point offered by an airline; and a hotel point offered by a timeshare operator. The points can be exchanged for a predetermined service (can be exchanged for a plane ticket, a hotel service, or the like) at a unique rate set in accordance with high and low seasons in particular.

In recent years, common points that can be exchanged for various general consumer product, and a service enabling a user to exchange the points with a medium deemed to have an asset value such as an electronic or virtual currency have been available, in addition to the points that can be exchanged for services limited in advance. For example, some timeshare operators offer a service enabling a user to interchangeably use hotel points offered by different timeshare operators, through a request to an exchange company.

Patent Documents 1 and 2 disclose examples of techniques related to this type of point exchange. Patent Document 1 discloses common points with enhanced values. More specifically, the proposed common points never expire and can be exchanged for various points at set fixed exchange rates, and thus these common points are highly appreciated and can be regarded as an asset. Patent Document 2 discloses a point exchange processing device that determines the value of the point that can be exchanged for a product, on the basis of the market price of the product.

### Citation List

### Patent Literature

Patent Document 1: JP2004-78342A
Patent Document 2: JP2014-137789A

### SUMMARY

### Technical Problem

Unfortunately, there is no basis supporting the equivalence of the exchange rate involved in the exchange of the common point disclosed in Patent Document 1 and a product. In other words, the exchange rate is arbitrary determined by an entity managing the common points, and thus the exchange based on such a rate would not be truly equivalent exchange. Thus, the owner of various points and provisional points might be unable to perform direct barter exchange.

Patent Document 2 discloses a point exchange processing device that determines a value of a product in the point exchange, only on the basis of a market price. The market prince indicates nothing more than an asking price from a seller, and thus the point exchange based on such a value performed by the point owner is far from being truly equivalent exchange. The point exchange processing device is for point-product exchange, and fails to cover equivalent barter exchange of various points or various provisional points.

As described above, the conventional point system lacks the basis of the equivalence of the exchange rate, and thus is difficult to guarantee the owner truly equivalent exchange, regardless of whether the points are directly exchanged or whether the common point is involved in the exchange. Furthermore, the techniques do not mention how information for supporting the equivalent exchange rate is collected and how the rate is calculated, meaning that the exchange rate is substantially solely based on "designated value" set by each entity issuing the point.

At least one embodiment of the present invention is made in view of the above problem, and an object of the present invention is to provide a point exchange system and a point exchange method with which an exchange rate for points made available by a plurality of business operators can be appropriately set for both an owner of the points and the business operators.

### Solution to Problem

(1) A point exchange system according to at least one embodiment of the present invention for achieving the object is configured to perform exchange of original points provided by a plurality of point providers respectively, at a predetermined exchange rate by using an electronic calculating device connected to a network, and includes: a storage unit which stores associated profit data and profit master data; a processing unit which processes the associated profit data on the basis of the profit master data; a value index management unit which sets a value index to each of the original points provided by the plurality of point providers so that the original points can be compared with one another; and an exchange unit configured to set the exchange rate on the basis of the processed profit master data, and the value indices set to the original points respectively so that the exchange is executed on the basis of the set exchange rate.
   In the configuration (1), the exchange rate is set on the basis of the associated profit data processed on the basis of the profit master data and on the value index set for comparison between the original points. Thus, the exchange rate for the original points made available by a plurality of business operators can be appropriately set for both an owner of the points and the business operators.
(2) In some embodiments, in the configuration (1), the exchange unit is configured to be capable of executing point-product exchange in which the original points are exchanged for provisional points provided by product providers that provide exchangeable products.
(3) In some embodiments, the configuration (2), further includes a transfer point issuing unit which issues transfer points exchangeable for the original points, and the exchange unit is configured to be capable of re-exchanging the transfer points for the original points or the provisional points.
   In the configuration (3), the points can not only be directly exchanged but can be exchanged by being temporarily exchanged for the inter-exchangeable transfer point. With equivalent exchange achieved with the transfer point that can facilitate various exchange involving the points and the provisional points, the various exchange involving the points and the provisional points is facilitated by the transfer point, resulting in a favorable impact on the market. The transfer point usable for achieving the equivalent exchange is highly appreciated, and thus the transfer point itself can be regarded as an asset.
(4) In some embodiments, in the configuration (3), the transfer point issuing unit calculates the exchange rate on the basis of the associated profit data and the profit master data.
(5) In some embodiments, in at least one of the configurations (1) to (4), the storage unit further stores credit rating information relating to the point providers, and the exchange unit sets the exchange rate on the basis of the credit rating information.
   The credit rating information may include information on a security deposit or a letter of credit. Such information may be provided to a financial institution and an escrow service business operator to be used for the sake of security for payment using points. Such a configuration can achieve a smooth exchange. Thus, the system may be configured to be capable of managing such a security condition.
(6) In some embodiments, the configuration (5) further includes a correction unit which corrects the exchange rate on the basis of the credit rating information.
   In the configuration (6), the value index management unit is used for determining the value of a product itself. With the correction unit, the determination can be made on the basis of an impact of the credit rate of the point provider on the value of the product.
(7) In some embodiments, the configuration (6) further includes a point issuing amount adjustment unit which adjusts an issue amount of the original points on the basis of the exchange rate corrected by the correction unit.
   The configuration (7) advantageously enables the exchange system to manage the issue amount of the points on the basis of the credit rate as the basis. Original points can be issued by the point providers as much as they desire. Thus, the transfer point issued for the exchange and the exchange rate used for the exchange may be generated on the basis of the credit rate of the point providers, so that the system can reduce a risk of the point providers going into default as a result of issuing the points over their capacities. With this configuration, safe point exchange can be achieved without intimidating the issuing of the point or compromising the uniqueness of the point.
(8) A point exchange method by which exchange of original points, provided by a plurality of point providers respectively, can be performed at a predetermined exchange rate by using an electronic calculating device connected to a network according to at least one embodiment of the present invention for achieving the object includes: a processing step in which associated profit data is processed on the basis of profit master data; a comparison step in which a value index is set to each of the original points provided by the plurality of point providers so that the original points can be compared with each other; and an exchange step in which the exchange rate is set on the basis of the processed profit master data, and the value indices set to the original points respectively, and the exchange is executed on the basis of the set exchange rate.
(9) In some embodiments, the configuration (8) further includes a point-product exchange step in which the original points are exchanged for provisional points provided by product providers that provide products exchangeable for the original points.
(10) In some embodiments, the configuration (9) further includes a transfer point exchange step in which the original points are exchanged for transfer points, and in the exchange step, the transfer points are re-exchanged for the original points or the provisional points.
(11) In some embodiments, at least one of the configurations (8) to (10) further includes a step in which credit rating information relating to the point providers is set, and in the exchange step, the exchange rate is corrected on the basis of the credit rating information.
(12) In some embodiments, in the configuration (11), in the exchange step, an issuing amount of the original points is adjusted on the basis of the corrected exchange rate.

The configurations (8) to (12) can be suitably implemented with the point exchange system (according to the various configurations described above).

### Advantageous Effects

According to at least one embodiment of the present invention, an exchange rate of points made available by a plurality of business operators can be appropriately set for both an owner of the points and the business operators. Thus, the points issued for variety of objectives and purposes on the basis of wide variety of standards, systems, and restrictions can be interchangeably used with safety and fairness guaranteed, without compromising the uniqueness of the points. The owner of various points can perform equivalent barter exchange of the points, whereby an attempt to achieve more positive and active economic activities is facilitated.

### BRIEF DESCRIPTION OF DRAWINGS

FIG. 1 is a block diagram illustrating a configuration of a point exchange system according to at least one embodiment of the present invention.
FIG. 2 is a flowchart illustrating steps of a point exchange method implemented with the point exchange system illustrated in FIG. 1.

### DETAILED DESCRIPTION

The following describes some embodiments of the present invention with reference to the accompanying drawings. It should be noted that the size, material, shape, relative arrangement, and the like of components described in the embodiments and illustrated in the drawings are given by way of example only and are not intended to limit the scope of the present invention to these. The expressions "including", "comprising", and "provided with" one component are not exclusive expressions that exclude other components.

First of all, terms used in the description of at least one embodiment of the present invention are described.

The term "mutual trade" indicates trading of a point provided by one of a plurality of point providers and a point provided by another point provider, in one or a plurality of point systems.

The term "exchange" indicates the mutual trade performed under equivalent exchange. The exchange is performed by the exchange unit. The exchange unit performs the exchange by using an exchange rate set for exchanging of original points. The term equivalent may not precisely reflect the actual condition, due to a lack of a well-defined basis for calculating a value of points, issued by point providers, other than points of electronic money or the like directly associated with money.

The concept of "equivalent" holds true in a case where the same price is set by parties involved in the point exchange system and also holds true in a case where a price set through an evaluation of a third party such as a neutral organization or system is the same as that set by the parties.

The term "point provider" indicates a natural person or a corporation that provides points registered in the point exchange system in advance.

The term "original point" is a point provided (issued) by the point provider. Examples of the original point include: a point that can be exchanged for a certain product such as a frequent-flyer point and a hotel point; and a point that can be exchanged for a medium with a widely acknowledged asset value such as a virtual currency.

The term "point target" is a product or a service that can be exchanged for the original point. For example, when the original point is the frequent-flyer point, the point target is an airplane ticket or the like that can be exchanged for the frequent-flyer point.

The term "product providing business operator" indicates a natural person or a corporation, registered in the point exchange system. This business operator does not provide (issue) the original points, but provides a product or a service that can be exchanged for or bought with the original points provided by point providers different from the business operator.

The "provisional point" is provided to a product or a service provided by a product provider for the sake of management by the point exchange system, and is not necessary exchanged for the original point. A product with the provisional point is supposed to be capable of being sold and bought with something other than the original point. With the provisional point defined by the system, a product provider that does not issue the original point can perform mutual trade of its product and the original point provided by the point provider. Thus, the provisional point is used for direct mutual trade and exchange of the original point and the product.

The term "point-product exchange" indicates exchange of an original point and a provisional point in the point exchange system.

The term "exchange rate" is a rate for performing the exchange.

The term "point-product exchange rate" is a rate for performing the point-product exchange.

For example, business operators as the point providers provide the original point as a special consumer benefit as a part of sales promotion using a point card or by providing a hotel stay ownership of a timeshare resort. Generally, timeshare resort business operators disclose points corresponding to a one-night stay fee. Unfortunately, the exchange of stay points provided by two or more timeshare resorts involves points with values arbitrary set by the business operators.

In an example where the point target is the point usable for the hotel stay issued by a timeshare resort hotel, the term "associated profit data" indicates profit data that has a certain level of association with or serves as a basis for calculating the value of the hotel stay, obtained by subtracting cost from a membership fee of the timeshare product, sales from visitors or regular client staying at the hotel, and the like. Alternatively, the associated profit data is operation profit data obtained by subtracting a certain cost determined in advance from a cost in the profit data. The associated profit data includes data including sales gross profit or the operation profit data similarly in a case where the provisional point target is a product on sale. Generally, to set a fair value to a product, a service, or the like, it is more logical to apply a certain level of correction to a business income, which is gross profit or sales profit in particular, obtained with the product or the service provided by the point provider, rather than directly employing the value arbitrary set by the providers of the product or the service.

The term "profit master information" indicates information for comparing and managing information on associated profit data between point providers on the basis of a certain rule in a point system or an exchange system according to the present invention.

The "data contributing to calculation of a product value" is one type of information in the profit master information. For example, the information indicates an industry to which a point providers and a point target object pertain, a special circumstance of each corporation that need to be taken into consideration, transition of past sales and various profits, the number clients, and the number of point users and a scale of their use of the points.

The exchange rate based on the above described associated profit data of a fixed value results in a huge error depending on the circumstances of the point providers. Thus, correction may be performed with a formula set in advance, with the policies stored in predetermined profit master.

The term "value index" indicates an index for correcting the associated profit data by the profit master data, and comparing values of the points provided by point providers, respectively.

The "value index management unit" is configured to be capable of using the value index for calculating the exchange rate. The value index of at least one point provider or product provider is stored in the storage unit in advance and thus can be referred to as appropriate. The value index may be collectable through a network.

A specific example of how the value index is utilized is described. For example, a timeshare resort hotel sets the value index as an index for calculating a value of a single ownership point through comparison based on a profit obtained with a normal hotel service provided by the hotel to a general client. The hotel sets the original point as what is known as a hotel point issued for the sake of convenience for defining a one-night stay fee issued from the timeshare resort hotel business operator to property shareowners. In such a case, the value index includes an index for deriving an exchange rate with which equivalent exchange of the original points issued by a plurality of timeshare resort business operators can be achieved, on the basis of data on the profit of the normal hotel service.

The term "transfer point" indicates a point that can be used facilitate the exchange of the original points, the provisional points, and of the original point and the provisional point (the point can be exchanged for both of the original point and the provisional point, and thus is configured to be usable for facilitating the exchange involving the original points and the provisional points).

The transfer point may represent a common currency unit for facilitating the exchange of points, and may also be associated with the provisional point in the system so as to be directly exchangeable for products and services.

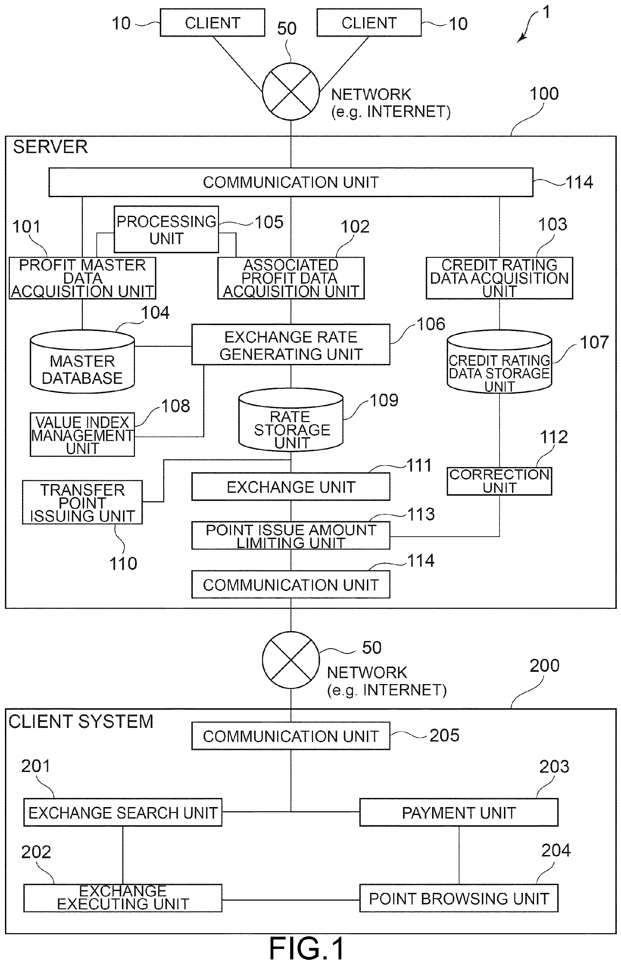

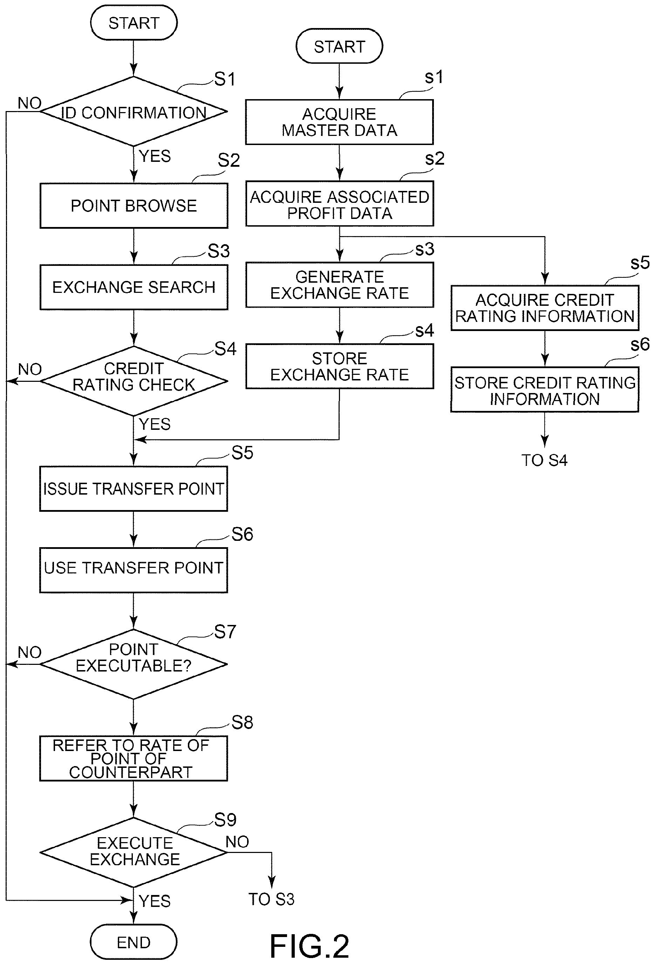

Next, at least one embodiment of the present invention is described in detail with reference to the drawings. FIG. 1 is a block diagram illustrating a configuration of a point exchange system according to at least one embodiment of the present invention. FIG. 2 is a flowchart illustrating steps of a point exchange method implemented with the point exchange system illustrated in FIG. 1.

The point exchange system 1 includes a server 100 and a client system 200 connected to each other through a network 50. The server 100 is implemented by installing software, for executing the point exchange method, in an electronic calculating device for example. Specifically, as illustrated in FIG. 1, the server 100 includes: a profit master data acquisition unit 101 which acquires profit master data; an associated profit data acquisition unit 102 which acquires associated profit data; a credit rating data acquisition unit 103 which acquires credit rating data; a unit 104 which stores the profit master data acquired by the profit master data acquisition unit 101; a processing unit 105 which processes the associated profit data on the basis of the profit master data; an exchange rate generating unit 106 which generates an exchange rate on the basis of the master data and the associated profit data; a credit rating data storage unit 107 which stores the credit rating data acquired by the credit rating data acquisition unit 103; a value index management unit 108 which is configured to be capable of comparing original points, issued by a plurality of point providers respectively, with each other with a value index set to each of the original points; a rate storage unit 109 which stores the exchange rate generated by the exchange rate generating unit 106; a transfer point issuing unit 110 which issues a transfer point which can be exchanged for the original points; an exchange unit 111 that performs exchange on the basis of the exchange rate stored in the rate storage unit 109; a correction unit 112 which corrects the exchange rate stored in the rate storage unit 109, on the basis of the credit rating data stored in the credit rating data storage unit 107; a point issuing amount adjustment unit 113 which adjusts a point issue amount on the basis of the exchange rate after the correction by the correction unit 112; and a communication unit 114 which is configured to be capable of transmitting and receiving various types of information to and from clients 10 or the client system 200 through the network 50.

The correction unit 112 may calculate a barter exchange rate or a transfer exchange rate, by referring to correction rate information on the corresponding type stored in the storage unit in advance.

The client system 200 includes an exchange search unit 201 that executes various searches in an exchange system; a point exchange executing unit 202 which executes the exchange of points; a payment unit 203 which performs payment with the points; a point browsing unit 204 with which a current point can be browsed; and a communication unit 205 which can transmit and receive various types of information to and from the server 100 through the network 50.

Next, a point exchange method implemented with the point exchange system having the configuration described above is described. Here, an example is described where persons with various points performs barter exchange of various points with the exchange system.

As illustrated in FIG. 2, processing starts when the client 10 as an owner of the various points accesses the server 100 from the client system 200 through the network 50. The client 10 inputs identification information such as an ID to perform identification confirmation (step S1), performs browsing of various points to be exchanged (step S2), performs exchange search (step S3), and then performs credit rating check (step S4).

The credit rating check is performed by reading the credit rating data acquired by the credit rating data acquisition unit 103 from the credit rating data storage unit 107 and checking the content of the data. When a result of the credit rating check indicates that the credit rating is insufficient (step S4: NO), the processing is terminated without performing the exchange (end). On the other hand, when a result of the credit rating check indicates that the credit rating is sufficient (step S4: YES), a transfer point is issued (step S5), and the transfer point is used (step S6).

Then, whether the point is executable is checked (step S7) by referring to the exchange rate of the point of the counterpart (step S8). When the owner agrees with the referred exchange rate and performs the exchange (step S9), the exchange is successfully completed.

The credit rating data used in step S4 and the exchange rate used in step S5 are set through the following process. First of all, the exchange rate is set on the basis of the profit master data acquired in step s1 and the associated profit data acquired in step s2 (step s3), and is stored in the rate storage unit 109 (step s3). On the other hand, the credit rating data is acquired in step s5, and is stored in the credit rating data storage unit 107 (step s6).

### Industrial Applicability

The present application can be applied to a point exchange system and a point exchange method which can be implemented by the system, for performing among business operators exchange of points, which can be exchanged for a product or a service, issued by a plurality of business operators respectively, by using an electronic calculating device such as a computer for example.

### Reference Signs List

- 1: Point exchange system
- 10: Client
- 50: Network
- 100: Server
- 101: Profit master data acquisition unit
- 102: Associated profit data acquisition unit
- 103: Credit rating data acquisition unit
- 104: Master database
- 105: Processing unit
- 106: Exchange rate generating unit
- 107: Credit rating data storage unit
- 108: Value index management unit
- 109: Rate storage unit
- 110: Transfer point issuing unit
- 111: Exchange unit
- 112: Correction unit
- 113: Point issue amount limiting unit
- 114: Communication unit
- 200: Client system
- 201: Exchange search unit
- 202: Exchange executing unit
- 203: Payment unit
- 204: Point browsing unit

## Claims

1. A point exchange system being configured to perform exchange of original points provided by a plurality of point providers respectively, at a predetermined exchange rate by using an electronic calculating device connected to a network, the point exchange system comprising:
a storage unit which stores associated profit data and profit master data;
a processing unit which processes the associated profit data on the basis of the profit master data;
a value index management unit which sets a value index to each of the original points provided by the plurality of point providers so that the original points are compared with one another; and
an exchange unit configured to set the exchange rate on the basis of the profit master data that are processed and the value indices set to the original points respectively, so that the exchange is executed on the basis of the exchange rate that is set.

2. The point exchange system according to claim 1, wherein the exchange unit is configured to be capable of executing point-product exchange in which the original points are exchanged for provisional points provided by product providers that provide products exchangeable for the original points.

3. The point exchange system according to claim 2, further comprising a transfer point issuing unit which issues transfer points exchangeable for the original points, wherein
the exchange unit is configured to be capable of re-exchanging the transfer points for the original points or the provisional points.

4. The point exchange system according to claim 3, wherein the transfer point issuing unit calculates the exchange rate on the basis of the associated profit data and the profit master data.

5. The point exchange system according to any one of claims 1 to 4, wherein
the storage unit further stores credit rating information relating to the point providers, and
the exchange unit sets the exchange rate on the basis of the credit rating information.

6. The point exchange system according to claim 5, further comprising a correction unit which corrects the exchange rate on the basis of the credit rating information.

7. The point exchange system according to claim 6 further comprising a point issuing amount adjustment unit which adjusts an issue amount of the original points on the basis of the exchange rate corrected by the correction unit.

8. A point exchange method by which exchange of original points, provided by a plurality of point providers respectively, are performed at a predetermined exchange rate by using an electronic calculating device connected to a network,
the point exchange method comprising:
a processing step in which associated profit data is processed on the basis of profit master data;
a comparison step in which a value index is set to each of the original points provided by the plurality of point providers so that the original points are compared with each other; and
an exchange step in which the exchange rate is set on the basis of the profit master data that are processed, and the value indices set to the original points respectively, and the exchange is executed on the basis of the exchange rate that is set.

9. The point exchange method according to claim 8, further comprising a point-product exchange step in which the original points are exchanged for provisional points provided by product providers that provide products exchangeable for the original points.

10. The point exchange method according to claim 9, further comprising a transfer point exchange step in which the original points are exchanged for transfer points, wherein
in the exchange step, the transfer points are re-exchanged for the original points or the provisional points.

11. The point exchange method according to any one of claims 8 to 10, further comprising a step in which credit rating information relating to the point providers is set, wherein
in the exchange step, the exchange rate is corrected on the basis of the credit rating information.

12. The point exchange method according to claim 11, wherein, in the exchange step, an issuing amount of the original points is adjusted on the basis of the exchange rate that is corrected.
